(19) Europäisches Patentamt / European Patent Office / Office européen des brevets

(11) **EP 2 873 578 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
***B60W 50/16*** (2012.01)

(21) Anmeldenummer: **14186866.1**

(22) Anmeldetag: **29.09.2014**

(54) **Verfahren zur Fahrassistenz**

Method for driver assistance

Procédé d'aide à la conduite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013223377**

(43) Veröffentlichungstag der Anmeldung:
**20.05.2015 Patentblatt 2015/21**

(73) Patentinhaber: **ROBERT BOSCH GMBH 70442 Stuttgart (DE)**

(72) Erfinder:
• **Heigele, Christian 70435 Stuttgart (DE)**
• **Mielenz, Holger 73760 Ostfildern (DE)**
• **Lehner, Philipp 75417 Mühlacker (DE)**

(56) Entgegenhaltungen:
**DE-A1-102008 061 302    DE-A1-102010 045 694**

EP 2 873 578 B1

**Beschreibung**

Stand der Technik

Die Erfindung betrifft ein Verfahren zur Fahrassistenz, wobei ein Fahrer eines Fahrzeugs haptisch durch eine Veränderung eines Lenkwiderstands darüber informiert wird, dass ein Objekt im Weg ist.

Aus der DE 10 2012 010 130 A1 ist ein Verfahren zum Ermitteln von kollisionsgefährdenden Lenkwinkelwerten eines Kraftfahrzeugs bekannt, wobei eine haptische Rückmeldung an den Fahrer ausgegeben wird, welche ihn vor einer drohenden Kollision mit einem Objekt warnt. Hierbei werden nur relevante Hindernisse berücksichtigt, das heißt solche Hindernisse, mit denen das Fahrzeug während einer vorgegebenen Zeitdauer ab einem aktuellen Zeitpunkt kollidieren könnte. Zu diesem Zweck wird ein Abstandsgrenzwert ermittelt, den das Fahrzeug in einer vorgegebenen Zeitdauer fahren würde. Die Berechnung eines zu einem am Fahrzeug gelegenen Referenzpunktes gehörigen Lenkwinkels erfolgt anhand eines Einspurmodells und kreisbogenförmiger Trajektorien.

Aus der DE 10 2008 061 302 A1 ist eine Vorrichtung und ein Verfahren zur Routenführungsassistenz eines mit einem Navigationssystem verbundenen Fahrzeugs bekannt, wobei eine Steuereinrichtung eine haptische Rückmeldung an den Fahrer des Fahrzeugs ausgibt, so dass dem Fahrer das Gefühl einer virtuellen "Fahrbahnrinne" vermittelt wird.

DE 10 2004 055 584 A1 zeigt eine Einparkhilfe, wobei ein zusätzliches Lenkmoment auf das Lenkrad aufgebracht wird, mittels dem der Fahrer des Fahrzeugs bei einem Einparkvorgang unterstützt wird. Durch Aufbringung eines Gegenmoments wird dem Fahrer angezeigt, dass er das Lenkrad nicht weiter in eine bestimmte Richtung drehen soll.

In DE 10 2009 046 731 A1 wird ein System vorgestellt, welches durch zusätzliche Momente am Lenkrad dem Fahrer Lenkhinweise gibt und ihn so dabei unterstützt, das Fahrzeug entlang einer vorher berechneten Trajektorie zu steuern.

Aus DE 10 2010 045 694 A1 ist ein Verfahren zur Vermeidung von Kollisionen eines Fahrzeugs mit Hindernissen bekannt, bei dem der aktuelle Lenkwinkel, die aktuelle Fahrzeugbeschleunigung und die Fahrzeugumgebung automatisch erfasst werden und einer Situationsbewertung zugrunde gelegt werden. Bei Feststellung einer drohenden Kollisionsgefahr wird die Simulation auf Grundlage eines im Vergleich zum aktuellen Lenkwinkel variierten Lenkwinkels wiederholt, bis ein Solllenkwinkel ermittelt wird, mittels dessen eine kollisionsfreie Fahrt ermöglicht wird, wobei der Fahrer des Fahrzeugs mittels einer Lenkempfehlung und/oder einer Geschwindigkeitsempfehlung vor einer drohenden Kollisionsgefahr mit einem erfassten Hindernis gewarnt und auf eine kollisionsfreie Streckenempfehlung hingewiesen wird. Die Lenkempfehlung kann derart ausgebildet sein, dass sie vom Fahrer intuitiv befolgt wird. Dies wird erzielt, indem ein auf die Lenkanlage des Fahrzeugs wirkendes Zusatzlenkmoment derart ausgegeben wird, dass der Fahrer beim Abweichen von der Lenkempfehlung mit zunehmender Abweichung einen zunehmenden Lenkwiderstand fühlt.

Eine Aufgabe der Erfindung besteht darin, dem Fahrer Informationen über das Fahrzeugumfeld bereitzustellen, die ihm das Rangieren erleichtern.

Offenbarung der Erfindung

Ein erfindungsgemäßes Verfahren zur Fahrassistenz, wobei ein Fahrer eines Fahrzeugs haptisch durch eine Veränderung eines Lenkwiderstands darüber informiert wird, dass ein Objekt im Weg ist, weist die folgenden Schritte auf:

    a) Ermitteln von Objekten in einem Erfassungsbereich einer Umgebungserfassungseinrichtung des Fahrzeugs,

    b) Ermitteln von freien Weglängen $L(\delta)$ bezüglich einstellbarer Lenkwinkel $\delta$, wobei die freien Weglängen $L(\ddot{o})$ durch Abstände des Fahrzeugs zu den ermittelten Objekten bestimmt werden,

    c) Ermitteln eines Gegenmomentprofils $G(\ddot{o})$ für jeden einstellbaren Lenkwinkel $\delta$ und

    d) Beaufschlagung des Lenkwiderstands mit einem Gegenmomentwert $T$ bei einer Lenkbewegung durch den Fahrer, welcher aus dem Gegenmomentprofil $G(\ddot{o})$ bestimmt wird,

wobei das Gegenmomentprofil $G(\delta)$ für jeden einstellbaren Lenkwinkel $\delta$ im Schritt c) anhand der ermittelten freien Weglänge $L(\ddot{o})$ für jeden einstellbaren Lenkwinkel $\delta$ oder anhand eines Veränderungswerts einer Funktion $n(\ddot{o})$ der ermittelten freien Weglänge $L(\delta)$ für jeden einstellbaren Lenkwinkel $\delta$ bestimmt wird.

Das Gegenmomentprofil $G(\delta)$ erlaubt eine Zuordnung von Gegenmomentwerten $T$ für jeden einstellbaren Lenkwinkel $\delta$. Da das Gegenmomentprofil $G(\delta)$ in Abhängigkeit der ermittelten freien Weglänge $L(\delta)$ bestimmt wird, wird im Schritt d) vorteilhaft ein haptisches Feedback mit einem Gegenmomentwert $T$ an den Fahrer ausgegeben, dessen Betrag nicht nur von dem Vorhandensein oder Nichtvorhandensein von Objekten im Erfassungsbereich der Umgebungserfassungseinrichtung abhängt, sondern auch von deren Abstand zum Fahrzeug.

Nach einer ersten Ausführungsform des erfindungsgemäßen Verfahrens wird das Gegenmomentprofil $G(\delta)$ für jeden einstellbaren Lenkwinkel $\delta$ im Schritt c) anhand der ermittelten freien Weglänge $L(\delta)$ zu dem Lenkwinkel $\delta$ ermittelt. Hierbei wird dem Fahrer durch eine Leichtgängigkeit oder Schwergängigkeit des Lenkrads eine Information über die noch verbliebene Weglänge bis zum Objekt vermittelt.

Das Gegenmomentprofil kann beispielsweise so aussehen, dass sich das Lenkrad umso schwerer drehen lässt, je kürzer die noch verbliebene Weglänge bis zum Objekt bei aktuellem Lenkwinkel ist, oder anders ausgedrückt, je länger die noch verbliebene Weglänge bis zum Objekt bei aktuellem Lenkwinkel ist, desto leichtgängiger ist das Lenkrad.

Gemäß einer zweiten Ausführungsform des erfindungsgemäßen Verfahrens ist vorgesehen, dass das Gegenmomentprofil G(δ) auf jeden einstellbaren Lenkwinkel δ im Schritt c) anhand eines Veränderungswerts einer Funktion n(δ) der ermittelten freien Weglänge L(δ) für jeden einstellbaren Lenkwinkel δ bestimmt wird. Hierbei werden dem Fahrer nicht direkt die Lenkwinkelbereiche vermittelt, die potentiell zu einer Kollision mit Hindernissen führen, sondern die haptische Rückmeldung erfolgt beispielsweise an Übergängen von langen zu kurzen noch verbliebenen Weglängen bis zum Objekt. Lenkt der Fahrer so, dass sich die Länge der freien Weglänge verkürzt, dann wird ein Gegenmoment erzeugt. Hierbei wird im Gegensatz zur ersten Ausführungsform des erfindungsgemäßen Verfahrens über den gesamten Lenkwinkelbereich betrachtet zwar weniger Information vermittelt, dafür wird allerdings eine Schwergängigkeit des Lenkrads über einen größeren Lenkwinkelbereich vermieden. Dies ist beispielsweise dann besonders vorteilhaft, wenn der Fahrer nah an ein Hindernis, z.B. an eine Garagenwand heranfährt.

Die beiden Verfahren bieten gegenüber dem Stand der Technik die Vorteile, dass keine störenden akustischen Signale zur Führung des Fahrers notwendig sind und dass das Wenden des Blicks auf eine Anzeige nicht erforderlich ist. Der Fahrer kann seine Aufmerksamkeit auf das Verkehrsgeschehen richten. Gegenüber einem Warnsignal wie einem Vibrieren am Lenkrad oder einem konstanten Gegenmoment wird dagegen mehr Information übertragen, da die Abstände zu den ermittelten Objekten berücksichtigt werden. Die Information, ob ein Hindernis im Weg ist und mit welchem Lenkeinschlag das Fahrzeug am Hindernis vorbeikommt, wird dadurch für den Fahrer intuitiv leicht verständlich gemacht.

Zusätzlich zur haptischen Rückmeldung kann beispielsweise eine akustische Warnung ausgegeben werden, wenn ein kollisionsgefährdender Lenkwinkel eingestellt ist. Akustische Signale werden von Fahrern in solchen Situationen aber oft als störend empfunden. Bevorzugt ist daher in diesem Fall auch vorgesehen, dass derartige akustische Signale deaktivierbar sind.

Vorteilhafte Weiterbildungen und Verbesserungen des im unabhängigen Anspruch angegebenen Verfahrens sind durch die in den abhängigen Ansprüchen aufgeführten Maßnahmen möglich.

Erfindungsgemäß weist der Gegenmomentwert T eine Abhängigkeit von einer aktuellen Lenkwinkelgeschwindigkeit w auf, das heißt

$$T = T(\delta, \omega).$$

Wurde ein den gesamten einstellbaren Lenkwinkelbereich widerspiegelnder Werteverlauf der freien Weglänge bestimmt, ist es zweckmäßig, diesen zu normieren. Nach einer Ausführungsform wird anhand der freien Weglänge L(δ) eine auf einem Wertebereich zwischen 0 und 1 normierte freie Weglänge $n_1(\delta)$ ermittelt gemäß

$$n_1(\delta) = \frac{L(\delta) - L_{min}}{L_{max} - L_{min}}.$$

wobei $L_{max}$ ein maximaler ermittelter Wert der freien Weglänge L(δ) bezüglich aller einstellbarer Lenkwinkel δ und $L_{min}$ ein minimaler ermittelter Wert der freien Weglänge L(δ) bezüglich aller einstellbarer Lenkwinkel δ ist. Ist der Unterschied zwischen $L_{max}$ und $L_{min}$ klein, dann kann es auch bei kleinen Bogenlängenunterschieden zu starker Reaktion am Lenkrad kommen. Somit ist es besonders vorteilhaft, $L_{max}$ und $L_{min}$ so zu wählen, dass eine minimale Differenz eingehalten wird, z.B.

$$L_{max} - L_{min} > d,$$

wobei d ein konstanter Wert ist, beispielsweise 2 m, 3 m oder 5 m.

Im Fall, dass das Gegenmomentprofil G(δ) für jeden einstellbaren Lenkwinkel δ im Schritt c) anhand der ermittelten freien Weglänge L(δ) für jeden einstellbaren Lenkwinkel δ bestimmt wird, wird das Gegenmomentprofil G(δ) bevorzugt anhand

$$G(\delta) = f \cdot n(\delta)$$

mit

$$n(\delta) = 1 - n_1(\delta) = 1 - \frac{L(\delta) - L_{min}}{L_{max} - L_{min}}$$

ermittelt, wobei f eine Funktion ist, die unabhängig von der freien Weglänge L(δ) ist und insbesondere ein konstanter Faktor sein kann.

Im Fall, dass der Wert des Gegenmoments für jeden einstellbaren Lenkwinkel δ im Schritt c) anhand eines Veränderungswerts einer Funktion n(δ) der ermittelten freien Weglänge L(δ) für jeden einstellbaren Lenkwinkel δ bestimmt wird, kann vorgesehen sein, eine mathematische Ableitung der Funktionen L($\delta$), $n_1(\delta)$ oder $n(\delta)$ zu bilden. Bevorzugt, da weniger rechenintensiv, ist vorgesehen, dass das Gegenmomentprofil G($\delta$) anhand

$$G(\delta) = f \cdot \Delta n(\delta, \omega)$$

ermittelt wird, mit

$$\Delta n(\delta, \omega) = n(\delta + \omega \tau) - n(\delta)$$

und

$$n(\delta) = 1 - n_1(\delta) = 1 - \frac{L(\delta) - L_{\min}}{L_{\max} - L_{\min}},$$

wobei f eine Funktion ist, die unabhängig von der freien Weglänge L($\delta$) ist und insbesondere ein konstanter Faktor sein kann. $\tau$ ist eine definierte Vorausschauzeit, die beispielsweise zwischen 100 und 500 ms liegen kann, insbesondere bei 100 ms, 200 ms oder 500 ms. $\omega$ ist die aktuelle Lenkwinkelgeschwindigkeit. Durch die Multiplikation $\omega\tau$ wird ein Schätzwert für den Lenkwinkel erhalten, der voraussichtlich nach Verstreichen der Zeit $\tau$ erreicht wird. Die Funktion $\Delta n(\delta, \omega)$ gibt also den Unterschied des gegebenenfalls normierten Gegenmomentprofils zum aktuellen Lenkwinkel und einem zukünftigen Lenkwinkel an, eine einfache Form einer numerischen Ableitung.

Da erfindungsgemäß nur ein Gegenmoment und nicht ein Zusatzmoment erzeugt werden soll, wird im Fall, dass das Gegenmomentprofil G($\delta$) für jeden einstellbaren Winkel im Schritt c) anhand eines Veränderungswerts einer Funktion n($\delta$) der ermittelten freien Weglänge L($\delta$) für jeden einstellbaren Lenkwinkel $\delta$ bestimmt wird, das Gegenmomentprofil G($\delta$) für einen Lenkwinkel $\delta$ gleich 0 gesetzt, falls für den einstellbaren Lenkwinkel $\delta$ ein negatives Gegenmomentprofil G($\delta$) ermittelt wird, beispielsweise gemäß

$$\Delta n_1(\delta, \omega) = \max(0, \Delta n(\delta, \omega)),$$

wobei dann

$$G(\delta) = f \cdot \Delta n_1(\delta, \omega).$$

Die Abhängigkeit des Gegenmomentwerts T von der Lenkwinkelgeschwindigkeit $\omega$ ist somit beispielsweise

$$T(\delta, \omega) = -c \cdot f(\omega) \cdot n(\delta)$$

oder

$$T(\delta, \omega) = -c \cdot f(\omega) \cdot \Delta n_1(\delta, \omega).$$

Durch das Minuszeichen wird ausgedrückt, dass das Gegenmoment der Drehbewegung am Lenkrad stets entgegengerichtet ist. Die positive Konstante c entspricht einem Verstärkungsfaktor, welcher parametrierbar ist.

Die Funktion f($\omega$) bildet die Lenkwinkelgeschwindigkeit $\omega$ auf den Wertebereich von -1 bis +1 ab. Beispielsweise wird eine abschnittsweise lineare Abhängigkeit genutzt,

$$f(\omega) = \begin{cases} \omega / \omega_{cut} & \text{für} & |\omega| \le \omega_{cut} \\ 1 & \text{für} & \omega > \omega_{cut} \\ -1 & \text{für} & \omega < -\omega_{cut} \end{cases}.$$

Der Parameter $\omega_{cut}$ bestimmt eine Lenkwinkelgeschwindigkeit, bei der ein Maximum erreicht wird. Für den Fachmann ersichtlich, sind auch andere Abbildungsfunktionen f($\omega$) denkbar, die bevorzugt folgende Eigenschaften aufweisen:

- Wertebereich [-1;1]
- monoton steigend
- punktsymmetrisch zum Ursprung
- f(0) = 0 (Gegenmoment verschwindet bei stillstehendem Lenkrad).

Nach einer bevorzugten Ausführungsform wird das Gegenmomentprofil G($\delta$) quantisiert. Vorteilhaft wird dabei berücksichtigt, dass der Fahrer über die Hände sehr kleine Intensitätsunterschiede gar nicht wahrnehmen oder unterscheiden kann, so dass die Unterschiede stufenweise umgesetzt werden. Dazu werden zumindest ein, bevorzugt mehrere Schwellwerte $s_1$, $s_2$, ...$s_n$ definiert und die Funktionen $n(\delta)$, $\Delta n_1(\delta, \omega)$ oder $\Delta n(\delta, \omega)$ werden ersetzt durch Funktionen $Y(n(\delta))$, $Y(\Delta n_1(\delta, \omega))$ oder $Y(\Delta n(\delta, \omega))$ mit

$$Y(x) = \begin{cases} 0 & \text{für} & x \le s_1 \\ 1/n & \text{für} & s_1 < x \le s_2 \\ ... & & \\ 1 & \text{für} & s_n \le x \end{cases}$$

Der Gegenmomentwert T bestimmt sich dann aus dem Gegenmomentprofil G($\delta$) und aus der Abhängigkeit der Lenkwinkelgeschwindigkeit $\omega$ gemäß

$$T(\delta,\omega) = -c \cdot f(\omega) \cdot Y(n(\delta))$$

oder

$$T(\delta,\omega) = -c \cdot f(\omega) \cdot Y(\Delta n_1(\delta,\omega)).$$

Die freien Weglängen $L(\delta)$ sind solche Weglängen, die das Fahrzeug von einer aktuellen Position aus mit unterschiedlichen aber konstanten Lenkeinschlägen, das heißt mit konstanten Krümmungen, bis zu einer Kollision mit einem ermittelten Objekt fahren könnte. Die freien Weglängen $L(\delta)$ sind daher bevorzugt Kreisbogenabschnitte. Die Kreisbögen führen beispielsweise vom Hinterachsmittelpunkt des Fahrzeugs ausgehend nach vorne oder nach hinten bezüglich des Fahrzeugs. Der Endpunkt eines Kreisbogens entspricht einer Fahrzeugposition, bei der es zur Kollision mit einem Objekt kommen würde. Für jede Krümmung kann eine Kreisbogenlänge bestimmt werden, die von der Fahrzeuggeometrie, der Fahrzeugposition und der Fahrzeugausrichtung abhängt sowie von den das Fahrzeug umgebenen Hindernissen. Diese Abhängigkeit zwischen der Krümmung und der Bogenlänge lässt sich zu jedem Zeitpunkt sowohl für den Bereich vor als auch hinter dem Fahrzeug bestimmen. Um einerseits einen Rechenaufwand bei der Durchführung der erfindungsgemäßen Verfahrensschritte zu reduzieren, andererseits aber auch den Gesamtlenkwinkelbereich des Fahrzeugs näherungsweise abzudecken, werden bevorzugt einige diskrete, über den gesamten Bereich verteilte Lenkwinkelwerte berücksichtigt, beispielsweise durch eine gleichmäßige Verteilung von Werten in Abständen von 10 oder 20 Grad.

Nach einem weiteren Aspekt umfasst ein Fahrassistenzsystem, welches einen Fahrer haptisch durch eine Veränderung eines Lenkwiderstandes darüber informiert, dass ein Objekt im Weg ist, die folgenden Einrichtungen:

eine Umgebungserfassungseinrichtung, welche eingerichtet ist, Objekte in einem Erfassungsbereich zu erfassen,

eine Einrichtung zur Objekterfassung und zur Ermittlung von Abständen des Fahrzeugs zu ermittelten Objekten,

eine Einrichtung zur Ermittlung von freien Weglängen $L(\delta)$ bezüglich einstellbarer Lenkwinkel $\delta$, wobei die freien Weglängen $L(\delta)$ durch Abstände des Fahrzeugs zu den ermittelten Objekten bestimmt sind,

eine Einrichtung zur Ermittlung eines Gegenmomentprofils $G(\delta)$ für jeden einstellbaren Lenkwinkel $\delta$,

eine Einrichtung zur Ermittlung eines Gegenmomentwerts T, welcher aus dem Gegenmomentprofil $G(\delta)$ und einem aktuellen Lenkwinkel bestimmt wird, wobei die Einrichtung zur Ermittlung des Gegenmomentwerts T dazu eingerichtet ist, Daten oder Messwerte einer Lenkwinkelerfassungseinrichtung zu empfangen und weiterzuverarbeiten, und

einen Aktuator, welcher dazu eingerichtet ist, ein am Lenkrad spürbares Gegenmoment zu erzeugen, wobei der Gegenmoment T eine Abhängigkeit von einer aktuellen Lenkwinkelgeschwindigkeit $\omega$ aufweist, das heißt $T=T(\delta, \omega)$.

Bevorzugt ist die Einrichtung zur Ermittlung des Gegenmomentwerts T außerdem dazu eingerichtet, Daten oder Messwerte einer Lenkwinkelgeschwindigkeitserfassungseinrichtung zu empfangen und weiterzuverarbeiten.

Vorteile der Erfindung

Durch eine Leichtgängigkeit oder durch eine Schwergängigkeit des Lenkrads wird dem Fahrer eine Information über Abstände zu Objekten im Erfassungsbereich der Umgebungserfassungseinrichtung des Fahrzeugs vermittelt. Der Fahrer kann somit beim Abfahren einer kollisionsfreien Trajektorie während des Rangierens, Parkens oder beim Durchfahren von Engstellen unterstützt werden.

Dabei kann der Fahrer, ohne den Blick auf eine Anzeige zu richten und seinen Blick vom Straßengeschehen abzuwenden, die Information erhalten und darauf rückschließen, wie weit ein Hindernis noch entfernt ist und außerdem in welchem Lenkwinkelbereich eine potentielle Kollision droht.

Kurze Beschreibung der Zeichnungen

Ausführungsbeispiele der Erfindung sind in den Zeichnungen dargestellt und in den nachfolgenden Beschreibungen näher erläutert.

Es zeigen

Figur 1     eine Situation mit einem Fahrzeug und mehreren im einer Umgebung des Fahrzeugs befindlichen Objekten,

Figur 2     eine schematische Darstellung eines erfindungsgemäßen Fahrassistenzsystems und

Figur 3     beispielhafte Verlaufskurven von freien Weglängen und Gegenmomenten für einstellbare Lenkwinkel.

In der nachfolgenden Beschreibung der Ausführungsbeispiele der Erfindung werden gleiche oder ähnliche Komponenten und Elemente mit gleichen oder ähnlichen Bezugszeichen bezeichnet, wobei auf eine wiederholte Beschreibung dieser Komponenten oder Elemente in Einzelfällen verzichtet wird. Die Figuren stellen den Gegenstand der Erfindung nur schematisch dar.

Ausführungsformen der Erfindung

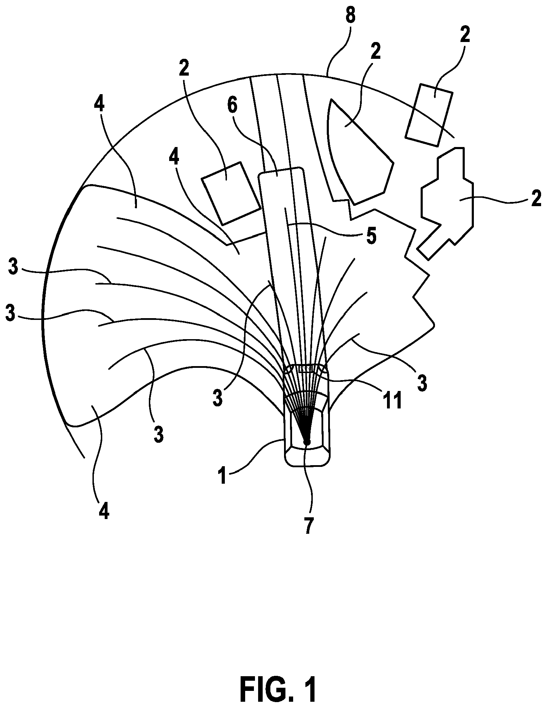

Figur 1 zeigt eine Situation mit einem Fahrzeug 1 und hier beispielhaft vier in einem Erfassungsbereich 8 einer Umgebungserfassungseinrichtung 11 des Fahrzeugs 1 befindlichen Objekten 2, die mit der Umgebungserfassungseinrichtung 11 des Fahrzeugs 1 ermittelt wurden. Im dargestellten Beispiel wird eine Vorwärtsfahrt des Fahrzeugs 1 betrachtet. Es versteht sich, dass eine Rückwärtsfahrt analog zu betrachten ist.

Basierend auf den Informationen über die Objekte 2 werden Kreisbogenabschnitte 3 ermittelt, die von einem Hinterachsmittelpunkt 7 des Fahrzeugs 1 ausgehend nach vorne gerichtet sind. Dargestellt sind außerdem Fahrschläuche 4, welche den Kreisbogenabschnitten 3 zugeordnet sind und jeweils einen Bereich bezeichnen, welchen das Fahrzeug 1 bei Befahrung eines Kreisbogenabschnitts 3 überstreicht.

Mit dem Bezugszeichen 5 ist ein Kreisbogenabschnitt 3 zu einem aktuellen eingestellten Lenkwinkel des Fahrzeugs 1 dargestellt und mit dem Bezugszeichen 6 der zugehörige Fahrschlauch 4 zum aktuell eingestellten Lenkwinkel des Fahrzeugs 1. Je nach Abstand zu den Objekten 2 ergeben sich Kreisbogenabschnitte 3 mit unterschiedlicher Länge. Für den Fall, dass kein Objekt 2 im Fahrschlauch 4 zu einem Kreisbogenabschnitt 3 ermittelt wurde, wird die Länge des Kreisbogenabschnittes 3 beispielsweise durch eine Größe des Erfassungsbereichs 8 der Umgebungserfassungseinrichtung 11 bestimmt.

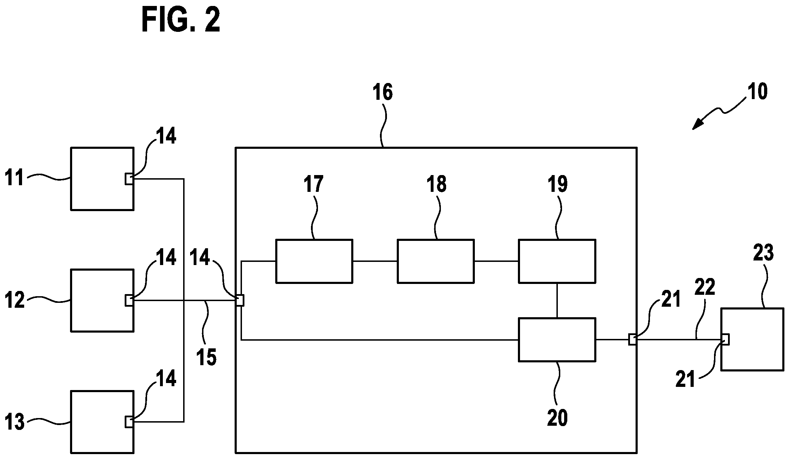

Figur 2 zeigt ein Fahrassistenzsystem 10 gemäß einer Ausführungsform der Erfindung.

Das Fahrassistenzsystem 10 umfasst die Umgebungserfassungseinrichtung 11, welche eingerichtet ist, die Objekte 2 in dem Erfassungsbereich 8 zu ermitteln. Die Umgebungserfassungseinrichtung 11 kann beispielsweise abstandsmessende Umfeldsensoren wie Ultraschallsensoren, Radar-, Lidar-, oder Stereo-Videosensoren aufweisen oder Informationen von externen Sensoren auswerten, wie beispielsweise einem Server, welcher per Funk Umgebungsdaten an das Fahrzeug 1 bereitstellt.

Das Fahrassistenzsystem 10 umfasst außerdem eine Lenkwinkelerfassungseinrichtung 12, welche Werte eines am Fahrzeug 1 aktuell eingestellten Lenkwinkels bereitstellt.

Das Fahrassistenzsystem 10 umfasst außerdem eine Lenkwinkelgeschwindigkeitserfassungseinrichtung 13, welche Werte einer aktuellen Lenkwinkelgeschwindigkeit bereitstellt.

Die Umgebungserfassungseinrichtung 11, die Lenkwinkelerfassungseinrichtung 12 und die Lenkwinkelgeschwindigkeitserfassungseinrichtung 13 sind mittels geeigneter Schnittstellen 14 mit einer Datenverarbeitungseinrichtung 16 verbunden, wobei die Kommunikation mittels eines Kommunikationskanals 15, beispielsweise mittels eines CAN-Busses erfolgen kann.

Die Datenverarbeitungseinrichtung 16 umfasst eine Einrichtung 17 zur Objekterfassung, welche über die Schnittstelle 14 insbesondere Daten der Umgebungserfassungseinrichtung 11 empfängt und weiter verarbeitet. Die Einrichtung 17 zur Objekterfassung ermittelt anhand der ihr bereitgestellten Daten die Objekte 2 im Erfassungsbereich 8 der Umgebungserfassungseinrichtung 11. Die Einrichtung 17 zur Objekterfassung weist außerdem ein Modul zur Abstandsermittlung von erfassten Objekten 2 auf. Die Einrichtung 17 zur Objekterfassung kann zweckmäßigerweise darüber hinaus Module aufweisen, welche Systemtotzeiten oder Fahrerreaktionszeiten berücksichtigen, und insbesondere auch Module zur Berücksichtigung von Eigengeschwindigkeiten erfasster Objekte 2, falls die erfassten Objekte 2 dynamische Objekte sind. Die Einrichtung 17 zur Objekterfassung kann außerdem Module zur Prädizierung von zukünftigen Positionen bzw. Abständen von Objekten 2 aufweisen.

Die Datenverarbeitungseinrichtung 16 weist weiterhin eine Einrichtung 18 zur Ermittlung einer freien Weglänge $L(\delta)$ auf, welche insbesondere Daten der Einrichtung 17 zur Objekterfassung empfängt und weiterverarbeitet. Die Einrichtung 18 zur Ermittlung der freien Weglänge $L(\delta)$ ist eingerichtet, die freie Weglänge $L(\delta)$, sowie bevorzugt auch eine normierte freie Weglänge $n_1(\delta)$ zu ermitteln.

Die Datenverarbeitungseinrichtung 16 weist eine Einrichtung 19 zur Ermittlung eines Gegenmomentprofils $G(\delta)$ für jeden einstellbaren Lenkwinkel $\delta$ auf. Die Einrichtung 19 zur Ermittlung des Gegenmomentprofils $G(\delta)$ empfängt insbesondere Daten der Einrichtung 18 zur Ermittlung der freien Weglänge $L(\delta)$ und verarbeitet diese weiter.

Die Datenverarbeitungseinrichtung 16 weist außerdem eine Einrichtung 20 zur Ermittlung eines Gegenmomentwerts T aus dem Gegenmomentprofil $G(\delta)$ auf, welche insbesondere Daten der Einrichtung 19 zur Ermittlung des Gegenmomentprofils $G(\delta)$ und Daten oder Messwerte der Lenkwinkelerfassungseinrichtung 12 und der Lenkwinkelgeschwindigkeitserfassungseinrichtung 13 empfängt und weiterverarbeitet. Aus dem aktuellen Lenkwinkel und der aktuellen Lenkwinkelgeschwindigkeit, insbesondere die Richtung der aktuellen Lenkwinkeländerung berücksichtigend, wird aus dem Gegenmomentprofil $G(\delta)$ das aktuelle Gegenmoment $T(\delta, \omega)$ ermittelt.

Die Einrichtung 20 zur Ermittlung des Gegenmomentwerts $T(\delta, \omega)$ gibt die Daten über eine Schnittstelle 21 an einen Kommunikationskanal 22 weiter, über welchen ein Aktuator 23 zur Erzeugung eines am Lenkrad spürbaren Gegenmoments gesteuert wird. Der Aktuator 23 kann eine elektrische Lenkung (electic power steering, EPS) steuern, oder auch eine hydraulische Servolenkung. Auch eine elektromechanische Bremse ist möglich, welche nach dem Prinzip der mechanischen Reibung eine Kraft auf das Lenkgestänge ausübt.

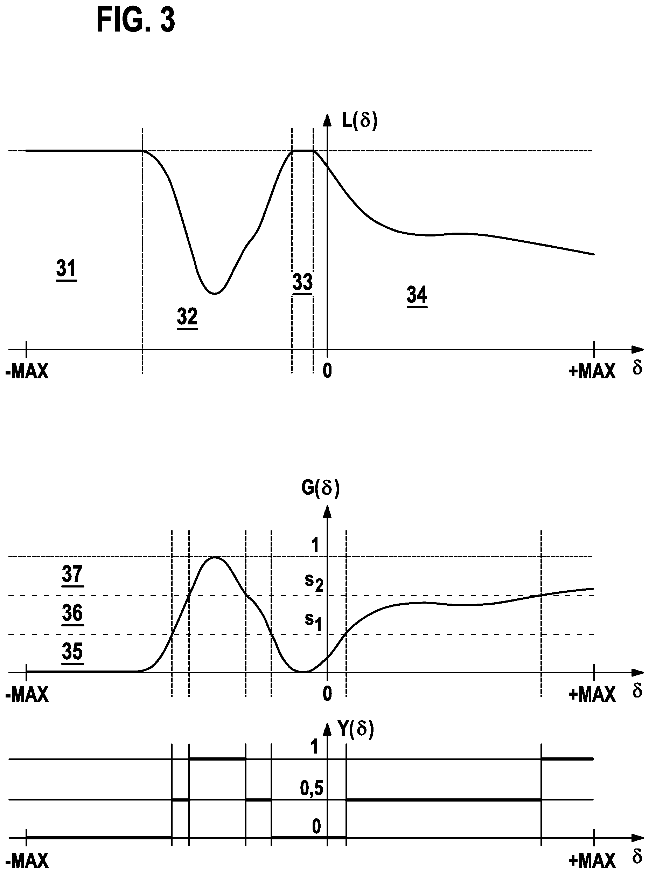

Figur 3 zeigt beispielhaft drei Kurvenverläufe für erfindungsgemäß bestimmte Größen, nämlich die freie Weglänge L(δ), das Gegenmomentprofil G(δ) und ein quantisiertes Gegenmomentprofil Y(δ), welche über einen einstellbaren Lenkwinkelbereich von -max bis +max dargestellt ist. Die freie Weglänge L(δ) weist beispielhaft einen ersten Bereich 31 auf, in dem kein Objekt 2 detektiert wurde, so dass die freie Weglänge L(δ) hier maximal ist. In einem zweiten Bereich 32 wird zumindest ein Objekt 2 detektiert, so dass die freie Weglänge L(δ) geringer als maximal ist. In einem dritten Bereich 33 wird wiederum kein Objekt 2 detektiert, so dass die freie Weglänge maximal ist. In einem vierten Bereich 34 ist die freie Weglänge L(δ) durch Vorhandensein eines Objekts 2 verringert.

Aus dem Verlauf der Kurve der freien Weglänge L(δ) wird das Gegenmomentprofil G(δ) für jeden einstellbaren Lenkwinkel δ wie zuvor beschrieben bestimmt, woraus sich der dargestellte Verlauf ergibt. Das Gegenmomentprofil G(δ) weist Werte zwischen 0 und 1 auf und zeigt ein Verhalten, bei welchem kleine freie Weglängen L(δ) zu großen Funktionswerten führen und große freie Weglängen L(δ) zu kleinen Funktionswerten. Dargestellt sind außerdem zwei Schwellwerte $s_1$ und $s_2$, welche das Intervall von 0 bis 1 beispielhaft in drei gleichgroße Bereiche 35, 36, 37 aufteilen.

Der Gegenmomentwert T bestimmt sich nach einer ersten Ausführungsform aus dem Gegenmomentprofil G(δ) bei einem bestimmten Lenkwinkel δ. Der Gegenmomentwert T kann außerdem eine Abhängigkeit von der Lenkwinkelgeschwindigkeit ω aufweisen, wie oben beschrieben.

Dargestellt ist weiterhin der Verlauf eines quantisierten Gegenmomentprofils Y(δ), wobei Funktionswerte des Gegenmomentprofils G(δ), welche unterhalb von $s_1$ liegen, auf 0 abgebildet werden, Funktionswerte, welche zwischen $s_1$ und $s_2$ liegen, auf 0,5 abgebildet werden und Funktionswerte, welche zwischen $s_2$ und 1 liegen, auf 1 abgebildet werden.

Der Gegenmomentwert T bestimmt sich nach einer zweiten Ausführungsform aus dem quantisierten Gegenmomentprofil Y(δ), welches sich wie beschrieben aus dem Gegenmomentprofil G(δ) ergibt, bei einem bestimmten Lenkwinkel δ. Der Gegenmomentwert T kann wiederum außerdem eine Abhängigkeit von der Lenkwinkelgeschwindigkeit ω aufweisen.

Die Erfindung ist nicht auf die hier beschriebenen Ausführungsbeispiele und den darin hervorgehobenen Aspekten beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Verfahren zur Fahrassistenz, wobei ein Fahrer eines Fahrzeugs (1) haptisch durch eine Veränderung eines Lenkwiderstands darüber informiert wird, dass ein Objekt (2) im Weg ist, mit den Schritten

   a) Ermitteln von Objekten (2) in einem Erfassungsbereich (8) einer Umgebungserfassungseinrichtung (11) des Fahrzeugs (1),
   b) Ermitteln von freien Weglängen L(ö) bezüglich einstellbarer Lenkwinkel δ, wobei die freien Weglängen L(ö) durch Abstände des Fahrzeugs (1) zu den ermittelten Objekten (2) bestimmt werden,
   c) Ermitteln eines Gegenmomentprofils G(δ) für jeden einstellbaren Lenkwinkel δ,
   d) Beaufschlagung des Lenkwiderstands mit einem Gegenmomentwert T bei einer Lenkbewegung durch den Fahrer, welcher aus dem Gegenmomentprofil G(δ) bestimmt wird,

   wobei das Gegenmomentprofil G(δ) für jeden einstellbaren Lenkwinkel δ im Schritt c) anhand der ermittelten freien Weglänge L(δ) für jeden einstellbaren Lenkwinkel δ oder anhand eines Veränderungswerts einer Funktion n(δ) der ermittelten freien Weglänge L(δ) für jeden einstellbaren Lenkwinkel δ bestimmt wird **dadurch gekennzeichnet, dass** der Gegenmomentwert T eine Abhängigkeit von einer aktuellen Lenkwinkelgeschwindigkeit ω aufweist, das heißt

$$T = T(\delta, \omega).$$

2. Verfahren nach Anspruch 1, **dadurch gekennzeichnet, dass** anhand der freien Weglänge L(δ) eine auf einen Wertebereich zwischen 0 und 1 normierte freie Weglänge $n_1(δ)$ ermittelt wird, gemäß

$$n_1(\delta) = \frac{L(\delta) - L_{\min}}{L_{\max} - L_{\min}},$$

   wobei $L_{\max}$ ein maximaler ermittelter Wert der freien Weglänge L(δ) bezüglich aller einstellbarer Lenkwinkel δ und $L_{\min}$ ein minimaler ermittelter Wert der freien Weglänge L(δ) bezüglich aller einstellbarer Lenkwinkel δ ist.

3. Verfahren nach Anspruch 2, **dadurch gekennzeichnet, dass** im Fall, dass das Gegenmomentprofil G(δ) für jeden einstellbaren Lenkwinkel δ im Schritt c) anhand der ermittelten freien Weglänge L($\delta$) für jeden einstellbaren Lenkwinkel $\delta$ bestimmt wird, das Gegenmomentprofil G($\delta$) anhand

$$G(\delta) = f \cdot n(\delta)$$

mit

$$n(\delta) = 1 - n_1(\delta)$$

ermittelt wird, wobei f eine Funktion ist, die unabhängig von der freien Weglänge L($\delta$) ist.

4. Verfahren nach Ansprüchen 1 und 2, **dadurch gekennzeichnet, dass** im Fall, dass das Gegenmomentprofil G($\delta$) für jeden einstellbaren Lenkwinkel $\delta$ im Schritt c) anhand eines Veränderungswerts einer Funktion der ermittelten freien Weglänge L(ö) für jeden einstellbaren Lenkwinkel $\delta$ bestimmt wird, das Gegenmomentprofil G($\delta$) anhand

$$G(\delta) = f \cdot \Delta n(\delta, \omega)$$

ermittelt wird, mit

$$\Delta n(\delta, \omega) = n(\delta + \omega\tau) - n(\delta)$$

und

$$n(\delta) = 1 - n_1(\delta),$$

wobei f eine Funktion ist, die unabhängig von der freien Weglänge L($\delta$) ist, und T eine definierte Vorausschauzeit ist.

5. Verfahren nach einem der vorhergehenden Ansprüche, **dadurch gekennzeichnet, dass** im Fall, dass das Gegenmomentprofil G($\delta$) für jeden einstellbaren Winkel im Schritt c) anhand eines Veränderungswerts einer Funktion n($\delta$) der ermittelten freien Weglänge L(ö) für jeden einstellbaren Lenkwinkel $\delta$ bestimmt wird, das Gegenmomentprofil G(ö) für einen Lenkwinkel $\delta$ gleich 0 gesetzt wird, falls für den einstellbaren Lenkwinkel $\delta$ ein negatives Gegenmomentprofil G($\delta$) ermittelt wird.

6. Verfahren nach einem der vorhergehenden Ansprüche, **dadurch gekennzeichnet, dass** das Gegenmomentprofil G($\delta$) mit zumindest einem Schwellwert $s_1$, $s_2$, ...$s_i$ quantisiert wird.

7. Verfahren nach einem der vorhergehenden Ansprüche, **dadurch gekennzeichnet, dass** die freien Weglängen L($\delta$) Kreisbogenabschnitte (3) sind.

8. Fahrassistenzsystem (10), welches einen Fahrer haptisch durch eine Veränderung eines Lenkwiderstands darüber informiert, dass ein Objekt (2) im Weg ist, mit

    einer Umgebungserfassungseinrichtung (11), welche eingerichtet ist, Objekte (2) in einem Erfassungsbereich (8) zu erfassen,
    einer Einrichtung (17) zur Objekterfassung und zur Ermittlung von Abständen des Fahrzeugs (1) zu ermittelten Objekten (2),
    einer Einrichtung (18) zur Ermittlung von freien Weglängen L($\delta$) bezüglich einstellbarer Lenkwinkel, wobei die freien Weglängen L($\delta$) durch die Abstände des Fahrzeugs (1) zu den ermittelten Objekten (2) bestimmt sind,
    einer Einrichtung (19) zur Ermittlung eines Gegenmomentprofils G($\delta$) für jeden einstellbaren Lenkwinkel $\delta$, und
    einer Einrichtung (20) zur Ermittlung eines Gegenmomentwerts T, welcher aus dem Gegenmomentprofil G(ö) und einem aktuellen Lenkwinkel bestimmt wird, wobei die Einrichtung (20) zur Ermittlung des Gegenmomentwerts T dazu eingerichtet ist, Daten oder Messwerte einer Lenkwinkelerfassungseinrichtung (12) zu empfangen und weiterzuverarbeiten, und
    einem Aktuator (23), welcher eingerichtet ist, ein am Lenkrad spürbares Gegenmoment zu erzeugen,
    **dadurch gekennzeichnet, dass** der Gegenmomentwert T eine Abhängigkeit von einer aktuellen Lenkwinkelgeschwindigkeit $\omega$ aufweist, das heißt

$$T = T(\delta, \omega).$$

9. Fahrassistenzsystem (10) nach Anspruch 8, **dadurch gekennzeichnet, dass** die Einrichtung (20) zur Ermittlung des Gegenmomentwerts T dazu eingerichtet ist, Daten oder Messwerte einer Lenkwinkelgeschwindigkeitserfassungseinrichtung (13) zu empfangen und weiterzuverarbeiten.

**Claims**

1. Driver assistance method, wherein a driver of a vehicle (1) is informed haptically by a change in steering resistance that an object (2) is in the way, having the steps:

    a) detecting objects (2) in a sensing range (8) of a surroundings-sensing device (11) of the vehicle (1),
    b) detecting free path lengths L($\delta$) with respect

to adjustable steering angles $\delta$, wherein the free path lengths $L(\delta)$ are determined by means of distances of the vehicle (1) from the detected objects (2),

c) detecting an opposing torque profile $G(\delta)$ for each adjustable steering angle $\delta$, and

d) applying an opposing torque value T to the steering resistance in the event of a steering movement by the driver which is determined from the opposing torque profile $G(\delta)$,

wherein the opposing torque profile $G(\delta)$ for each adjustable steering angle $\delta$ in step c) is determined on the basis of the detected free path length $L(\delta)$ for each adjustable steering angle $\delta$ or on the basis of a change value of a function $n(\delta)$ of the detected free path length $L(\delta)$ for each adjustable steering angle $\delta$, **characterized in that** the opposing torque T has a dependence on a current steering angle speed $\omega$, that is to say

$$T = T(\delta, \omega).$$

2. Method according to Claim 1, **characterized in that** a free path length $n_1(\delta)$ which is standardized to a value range between 0 and 1 is detected on the basis of the free path length $L(\delta)$, according to

$$n_1(\delta) = \frac{L(\delta) - L_{min}}{L_{max} - L_{min}}$$

where $L_{max}$ is a maximum detected value of the free path length $L(\delta)$ with respect to all the adjustable steering angles $\delta$ and $L_{min}$ is a minimum detected value of the free path length $L(\delta)$ with respect to all the adjustable steering angles $\delta$.

3. Method according to Claim 2, **characterized in that** in the event of the opposing torque profile $G(\delta)$ for each adjustable steering angle $\delta$ in step c) being determined on the basis of the detected free path length $L(\delta)$ for each adjustable steering angle $\delta$, the opposing torque profile $G(\delta)$ is obtained on the basis of

$$G(\delta) = f \cdot n(\delta)$$

where

$$n(\delta) = 1 - n_1(\delta),$$

where f is a function which is independent of the free path length $L(\delta)$.

4. Method according to Claims 1 and 2, **characterized in that** in the event of the opposing torque profile $G(\delta)$ for each adjustable steering angle $\delta$ in step c) being determined on the basis of a change value of a function of the detected free path length $L(\delta)$ for each adjustable steering angle $\delta$, the opposing torque profile $G(\delta)$ is detected on the basis of

$$G(\delta) = f \cdot \Delta n(\delta, \omega)$$

where

$$\Delta n(\delta, \omega) = n(\delta + \omega \tau) - n(\delta)$$

and

$$n(\delta) = 1 - n_1(\delta),$$

wherein f is a function which is independent of the free path length $L(\delta)$ and $\tau$ is a defined preview time.

5. Method according to one of the preceding claims, **characterized in that** in the event of the opposing torque profile $G(\delta)$ for each adjustable angle in step c) being determined on the basis of a change value of a function $\eta(\delta)$ of the detected free path length $L(\delta)$ for each adjustable steering angle $\delta$, the opposing torque profile $G(\delta)$ is set for a steering angle $\delta$ equal to 0 if a negative opposing torque $G(\delta)$ is detected for the adjustable steering angle $\delta$.

6. Method according to one of the preceding claims, **characterized in that** the opposing torque profile $G(\delta)$ is quantized with at least one threshold value $s_1, s_2 \ldots s_i$.

7. Method according to one of the preceding claims, **characterized in that** the free path lengths $L(\delta)$ are circular arc sections (3).

8. Driver assistance system (10) which informs the driver haptically by a change in steering resistance that an object (2) is in the way, having
a surroundings sensing device (11) which is configured to sense objects (2) in a sensing range (8),
a device (17) for sensing objects and for detecting distances of the vehicle (1) from detected objects (2),
a device (18) for detecting free path lengths $L(\delta)$ with respect to adjustable steering angles, wherein the free path lengths $L(\delta)$ are determined by means of the distance of the vehicle (1) from the detected object (2),
a device (19) for detecting an opposing torque profile $G(\delta)$ for each adjustable steering angle $\delta$, and

a device (20) for detecting an opposing torque value T which is determined from the opposing torque profile G(δ) and a current steering angle, wherein the device (20) for detecting the opposing torque value T is configured to receive and further process data or measured values of a steering angle-sensing device (12), and

an actuator (23) which is configured to generate an opposing torque which can be felt at the steering wheel,

**characterized in that** the opposing torque value T has a dependence on a current steering angle ω, that is to say

$$T \;=\; T(\delta, \omega)\,.$$

**9.** Driver assistance system (10) according to Claim 8, **characterized in that** the device (20) for detecting the opposing torque value T is configured to receive and further process data or measured values of a steering angle speed-sensing device (13).

**Revendications**

**1.** Procédé d'assistance à la conduite, un conducteur d'un véhicule (1) étant informé par voie tactile par une variation d'un retour de force dans le volant qu'un objet (2) se trouve sur la route, comprenant les étapes consistant à :

a) rechercher des objets (2) dans une zone de détection (8) d'un système de détection environnementale (11) du véhicule (1),
b) rechercher des longueurs de course L(δ) libres concernant un angle de braquage δ réglable, les longueurs de course L(δ) libres étant déterminées par des écarts entre le véhicule (1) et les objets (2) recherchés,
c) rechercher un profil de couple antagoniste G(δ) pour chaque angle de braquage δ réglable,
d) lors d'un mouvement de direction du conducteur, exercer le retour de force dans le volant avec une valeur de couple antagoniste T, laquelle est déterminée à partir du profil de couple antagoniste G(δ),

le profil de couple antagoniste G(δ) étant déterminé pour chaque angle de braquage δ réglable dans l'étape c) à l'aide de la longueur de course L(δ) libre recherchée pour chaque angle de braquage δ réglable ou à l'aide d'une valeur de variation d'une fonction n(δ) de la longueur de course L(δ) libre recherchée pour chaque angle de braquage δ réglable **caractérisé en ce que** la valeur de couple antagoniste T présente une dépendance par rapport à une vitesse angulaire de braquage actuelle ω, c'est-à-dire que

$$T = T(\delta, \omega)\,.$$

**2.** Procédé selon la revendication 1, **caractérisé en ce qu'**à l'aide de la longueur de course L(δ) libre, une longueur de course $n_1(\delta)$ libre normalisée à un ordre de valeurs compris entre 0 et 1 est recherchée, selon

$$n_1(\delta) = \frac{L(\delta) - L_{\min}}{L_{\max} - L_{\min}}\,.$$

$L_{\max}$ étant une valeur maximale recherchée de la longueur de course L(δ) libre au niveau de tous les angles de braquage δ réglables et $L_{\min}$ étant une valeur minimale recherchée de la longueur de course L(δ) libre au niveau de tous les angles de braquage δ réglables.

**3.** Procédé selon la revendication 2, **caractérisé en ce que** dans le cas où le profil de couple antagoniste G(δ) pour chaque angle de braquage δ réglable est déterminé dans l'étape c) à l'aide de la longueur de course L(δ) libre recherchée pour chaque angle de braquage δ réglable, le profil de couple antagoniste G(δ) est recherché à l'aide de

$$G(\delta) = f \cdot n(\delta)$$

avec

$$n(\delta) = 1 - n_1(\delta)$$

f étant une fonction qui est indépendante de la longueur de course L(δ) libre.

**4.** Procédé selon les revendications 1 et 2, **caractérisé en ce que** dans le cas où le profil de couple antagoniste G(δ) pour chaque angle de braquage δ réglable est déterminé dans l'étape c) à l'aide d'une valeur de variation d'une fonction de la longueur de course L(δ) libre recherchée pour chaque angle de braquage δ réglable, le profil de couple antagoniste G(δ) est recherché à l'aide de

$$G(\delta) = f \cdot \Delta n(\delta, \omega)$$

avec

$$\Delta n(\delta, \omega) = n(\delta + \omega\tau) - n(\delta)$$

et

$$n(\delta) = 1 - n_1(\delta),$$

f étant une fonction qui est indépendante de la longueur de course L($\delta$) libre, et $\tau$ étant un temps de prévision défini.

5. Procédé selon l'une quelconque des revendications précédentes, **caractérisé en ce que** dans le cas où le profil de couple antagoniste G($\delta$) pour chaque angle réglable est déterminé dans l'étape c) à l'aide d'une valeur de variation d'une fonction n($\delta$) de la longueur de course L($\delta$) libre recherchée pour chaque angle de braquage $\delta$ réglable, le profil de couple antagoniste G($\delta$) pour un angle de braquage $\delta$ est placé à 0 si pour l'angle de braquage $\delta$ réglable, un profil de couple antagoniste G($\delta$) négatif est recherché.

6. Procédé selon l'une quelconque des revendications précédentes, **caractérisé en ce que** le profil de couple antagoniste G($\delta$) est quantifié avec au moins une valeur seuil $s_1$, $s_2$, ...$S_i$.

7. Procédé selon l'une quelconque des revendications précédentes, **caractérisé en ce que** les longueurs de course L($\delta$) libres sont des portions d'arc de cercle (3).

8. Système d'assistance à la conduite (10), lequel informe par voie tactile un conducteur par une variation d'un retour de force dans le volant qu'un objet (2) se trouve sur la route, comprenant

un système de détection environnementale (11), lequel est aménagé pour détecter des objets (2) dans une zone de détection (8),

un système (17) de détection d'objets et de recherche d'écarts entre le véhicule (1) et l'objet (2) recherché, un système (18) de recherche de longueurs de course L($\delta$) libres au niveau de l'angle de braquage réglable, les longueurs de course L($\delta$) libres étant déterminées par les écarts entre le véhicule (1) et les objets (2) recherchés,

un système (19) de recherche d'un profil de couple antagoniste G($\delta$) pour chaque angle de braquage $\delta$ réglable et

un système (20) de détermination d'une valeur de couple antagoniste T, laquelle est déterminée à partir du profil de couple antagoniste G($\delta$) et d'un angle de braquage actuel, le système (20) de détermination de la valeur de couple antagoniste T étant aménagé pour réceptionner et retraiter des données ou des valeurs de mesure d'un système de détection de l'angle de braquage (12) et

un actionneur (23), lequel est aménagé pour générer un couple antagoniste perceptible au volant, **caractérisé en ce que** la valeur de couple antagoniste T présente une dépendance par rapport à une vitesse angulaire de braquage $\omega$ actuelle, c'est à dire que

$$T = T(\delta, \omega).$$

9. Système d'assistance à la conduite (10) selon la revendication 8, **caractérisé en ce que** le système (20) de recherche de la valeur de couple antagoniste T est aménagé pour réceptionner et retraiter des données ou des valeurs de mesure d'un système de détection de la vitesse d'angle de braquage (13).

**FIG. 1**

FIG. 2

EP 2 873 578 B1

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012010130 A1
- DE 102008061302 A1
- DE 102004055584 A1
- DE 102009046731 A1
- DE 102010045694 A1